# DEMANDE DE BREVET EUROPEEN

(11) **EP 4 442 619 A1**
(43) Date de publication de la demande: **09.10.2024**
(21) Numéro de dépôt: 24167682.4
(22) Date de dépôt: 28.03.2024
(51) Int. Cl.: B65G 47/08, B65G 47/22, B65G 47/71, B65G 47/82

(54) **INSTALLATION D ACCUMULATION ET DE TRANSFERT DE PRODUITS**

(30) Priorité: 06.04.2023 FR 2303438
(71) Demandeur: Sidel Participations, 76930 Octeville-sur-Mer (FR)
(72) Inventeur: BOSSERT, Nicolas, 67116 REICHSTETT (FR)
(74) Mandataire: Sidel Group

(57) **Abrégé**

L'invention concerne une installation (100) d'accumulation et de transfert de produits (2) comprenant :
- un dispositif (1) de convoyage desdits produits (2) en un flux unifilaire, ledit dispositif (1) comprenant un convoyage amont (10), au moins deux convoyages aval (11, 12) débouchant longitudinalement dans une zone de prise (P), et un système de division (13) pour envoyer depuis ledit convoyage amont (10) successivement vers l'un des convoyages aval (11, 12) au moins un premier flux unifilaire de produits (2) sous forme de lots vers un convoyage aval (11, 12) et au moins un deuxième flux unifilaire de produits (2) sous forme de lots vers un autre convoyage aval (11, 12),
- au moins un convoyeur de sortie (3) desdits produits (2),
- une surface (4) d'accumulation pour recevoir les produits (2) sous forme de lots depuis la zone de prise (P), ladite surface (4) étant située entre ledit dispositif (1) de convoyage et ledit au moins un convoyeur de sortie (3),
- un moyen (5) de transfert pour déplacer transversalement au moins un lot de produits (2), d'une part, depuis au moins un convoyage aval (11, 12) au niveau de la zone de prise (P) jusqu'à ladite surface (4) d'accumulation et, d'autre part, depuis ladite surface (4) jusqu'audit au moins un convoyeur de sortie (3),
installation (100) caractérisée en ce que, pour au moins deux convoyages aval (11, 12), entre ledit système de division (13) et la zone de prise (P), la longueur d'un convoyage aval (11) est plus grande que la longueur d'au moins un autre convoyage aval (12), pour que au moins deux lots de produits (2) formés successivement par le système de division (13) et envoyé, pour l'un d'eux sur l'un des convoyages aval (11, 12) et pour l'autre sur l'autre convoyage aval (11, 12), arrivent sensiblement au même moment au niveau de ladite zone de prise (P).

L'invention concerne également un procédé d'accumulation et de transfert de produits (2) dans une ligne de conditionnement.

## Description

La présente invention relève du domaine du convoyage de produits au sein d'une ligne industrielle de traitement, et a pour objet, d'une part, une installation d'accumulation et de transfert de produits, d'autre part, un procédé mettant en oeuvre cette installation, à savoir un procédé d'accumulation et de transfert de produits pour surface de réception.

Dans ce domaine, les produits, qui peuvent être des bouteilles, cannettes, flacons, boîtes, caisses, cartons, fardeaux, ou autres, sont convoyés entre des postes de traitement successifs à l'aide de convoyeurs essentiellement du type à bande sans fin. Les produits circulent en flux unifilaire, en flux multifilaire, voire aussi en vrac.

Afin d'avoir une ligne complète capable de produire en continu malgré les arrêts ou changements de cadence des différents postes, pour différentes raisons tels que des défauts ou des manques de consommable, il est nécessaire d'avoir des solutions d'accumulation entre les postes, qui accueillent les produits traités par le poste en amont pendant que le poste en aval ne peut fonctionner, et/ou qui fournissent le poste en aval en produits à traiter alors que le poste en amont ne peut fonctionner.

On connaît le brevet EP3112298 qui propose de transférer transversalement deux lots longitudinaux de produits depuis une zone d'entrée jusqu'à une surface de réception. Le dispositif tel que décrit nécessite l'implantation d'un moyen de convoyage tampon entre le convoyeur d'entrée et la surface de réception, ainsi que l'utilisation de deux outils distincts pour le transfert sur la surface de réception. En effet, un premier outil de type poussoir assure le transfert depuis un convoyeur d'entrée sur le moyen de convoyage tampon et un deuxième outil se charge du transfert des lots depuis le moyen de convoyage tampon jusqu'à la surface de réception. De cette manière, il est possible d'arrêter les produits sur le convoyage tampon pendant leur transfert tout en permettant à un flux de produits de circuler sur le convoyeur d'entrée. Le temps de cycle pour chaque transfert est donc allongé et la cadence de la production de la ligne s'en trouve impactée. Par ailleurs, transférer simultanément deux lots de produits nécessite soit l'insertion d'une zone d'attente supplémentaire entre le convoyeur d'entrée et le convoyage tampon, soit l'arrêt la ligne de production. Cette zone d'attente augmente l'emprise au sol du dispositif.

Il existe donc un besoin dans l'état de l'art actuel pour une solution d'accumulation de grande capacité, peu complexe, qui permet de traiter des produits à haute vitesse, sans ralentissement de la ligne de conditionnement, tout en limitant les risques sur les produits lors de leur entrée sur la surface de réception. Il est également souhaitable de limiter l'encombrement d'une telle solution.

Pour ce faire, on propose une installation comprenant au moins deux voies de circulation distinctes pour des lots successifs de produits, au moins deux desdites voies ayant des longueurs de trajet différentes depuis un convoyage amont jusqu'à une zone de prise. De cette manière, des lots de produits, pourtant formés successivement sur chacune des voies, arrivent sensiblement au même moment dans la zone de prise.

A cet effet, l'invention propose essentiellement de dévier successivement un flux unifilaire de produits sous forme de lot depuis un convoyage amont vers l'un des convoyages aval au moyen d'un système de division, chacun des convoyages aval présentant une voie propre de circulation de produits entre le système de division et la zone de prise des produits. En outre, pour au moins deux convoyages aval, un des convoyages aval est significativement plus long que l'autre convoyage aval.

L'utilisation de plusieurs voies de circulation distinctes entre un système de division et une zone de prise, une voie étant propre à chacun des convoyages de l'installation, contribue à synchroniser l'arrivée des produits au niveau de la zone de prise, pour leur transfert jusqu'à la surface d'accumulation. En particulier, pour au moins deux convoyages aval, un des convoyages aval est significativement plus long que l'autre convoyage aval, pour que au moins deux lots de produits formés successivement par le système de division et envoyé, pour l'un d'eux sur l'un des convoyages aval et pour l'autre sur l'autre convoyage aval, arrivent sensiblement au même moment au niveau de ladite zone de prise. Ainsi, des produits déviés par le système de division sous forme de lot sur un convoyage aval auront un trajet à parcourir d'une distance différente des produits déviés sous forme de lot sur l'autre convoyage aval.

Les produits, circulant chacun respectivement sur un des convoyages aval sous forme de lot, arrivent sensiblement au même moment au niveau de la zone de prise, et il n'est plus nécessaire de dégager alternativement les lots ainsi formés depuis chacun des convoyages aval.

En d'autres termes, l'arrivée des lots sur chacun des convoyages aval de l'installation au niveau de la zone de prise se faisant sensiblement au même moment, il est possible de transférer simultanément et aisément vers la surface d'accumulation plusieurs lots adjacents de produits, chacun des lots se trouvant sur un des convoyages aval, même non séparés par une plaque morte.

De manière avantageuse, l'invention permet de transférer simultanément au moins deux lots adjacents de produits depuis la zone de prise vers la surface d'accumulation, l'installation comprenant au moins deux convoyages aval.

En outre, l'utilisation d'au moins deux voies de circulation qui présentent des distances à parcourir différentes pour les produits sous forme de lot permet d'avoir un temps de cycle, c'est-à-dire de transfert, très court tout en étant très efficace.

Le temps d'arrivée entre au moins deux lots de produits peut être faible, voire nul, lorsque l'arrivée des flux unifilaires de produits est synchronisée de manière à permettre une arrivée des lots en même temps sur les au moins deux convoyages aval de l'installation au niveau de la zone de prise.

L'invention vise ainsi à fournir une installation d'accumulation et de transfert de produits simple, compacte et efficace et à fournir le procédé associé à cette installation.

A cet effet, l'invention a tout d'abord pour objet une installation d'accumulation et de transfert de produits, comprenant :
- un dispositif de convoyage desdits produits en un flux unifilaire, ledit dispositif comprenant un convoyage amont, au moins deux convoyages aval débouchant longitudinalement dans une zone de prise, et un système de division pour envoyer depuis ledit convoyage amont successivement vers l'un des convoyages aval au moins un premier flux unifilaire de produits sous forme de lots vers un convoyage aval et au moins un deuxième flux unifilaire de produits sous forme de lots vers un autre convoyage aval,
- au moins un convoyeur de sortie desdits produits,
- une surface d'accumulation pour recevoir les produits sous forme de lots depuis la zone de prise, ladite surface étant située entre ledit dispositif de convoyage et ledit au moins un convoyeur de sortie,
- un moyen de transfert pour déplacer transversalement au moins un lot de produits, d'une part, depuis au moins un convoyage aval au niveau de la zone de prise jusqu'à ladite surface d'accumulation et, d'autre part, depuis ladite surface jusqu'audit au moins un convoyeur de sortie.

Selon l'invention, l'installation se caractérise en ce que, pour au moins deux convoyages aval, entre le système de division et la zone de prise, la longueur d'un convoyage aval est plus grande que la longueur d'au moins un autre convoyage aval, pour que au moins deux lots de produits formés successivement par le système de division et envoyé, pour l'un d'eux sur l'un des convoyages aval et pour l'autre sur l'autre convoyage aval, arrivent sensiblement au même moment au niveau de ladite zone de prise.

Dans des modes de réalisation, l'installation comprend au moins trois convoyages aval, et chacun des convoyages aval a une longueur différente, pour que tous les lots de produits formés successivement par le système de division arrivent sensiblement au même moment au niveau de la zone de prise.

Dans des modes de réalisation, l'installation comprend deux convoyages aval et le système de division est apte à envoyer depuis ledit convoyage amont successivement et alternativement un premier flux unifilaire de produits sous forme de lots vers un convoyage aval et un deuxième flux unifilaire de produits sous forme de lots vers l'autre convoyage aval, pour que deux lots de produits formés successivement par le système de division arrivent sensiblement au même moment au niveau de ladite zone de prise.

Selon des caractéristiques additionnelles, non limitatives, les convoyages aval sont en forme de U.

Dans des modes de réalisation, le système de division est un déflecteur commandé qui dévie successivement et alternativement un nombre déterminé de produits formant ensemble un lot sur les convoyages aval.

Selon une caractéristique additionnelle possible, le moyen de transfert comprend au moins deux parois pour transférer simultanément, depuis la zone de prise jusqu'à la surface d'accumulation, au moins deux lots longitudinaux de produits, chacun des lots se situant sur l'un des convoyages aval.

Dans des modes de réalisation, le moyen de transfert comprend un moyen d'entrée et un moyen de sortie, ledit moyen d'entrée étant configuré pour transférer transversalement un lot de produits depuis au moins un convoyage aval en zone de prise jusqu'à la surface d'accumulation et ledit moyen de sortie étant configuré pour transférer transversalement au moins un lot de produits depuis la surface d'accumulation jusqu'à au moins un convoyeur de sortie.

Dans des modes de réalisation, le moyen de transfert comprend une pluralité de poussoirs, chaque poussoir étant apte à transférer un lot de produits depuis au moins un convoyage aval jusqu'à au moins un convoyeur de sortie en traversant la surface d'accumulation.

Selon une caractéristique additionnelle possible, les convoyages aval ont chacun au moins un moteur d'entraînement qui lui est propre.

Dans des modes de réalisation, au moins un convoyage aval comprend deux bandes de convoyage l'une à la suite de l'autre, chacune des deux bandes ayant un moteur d'entraînement qui lui est propre, pour que les vitesses de convoyage des deux bandes successives puissent être différentes.

L'invention a aussi pour objet un procédé d'accumulation et de transfert de produits dans une ligne de conditionnement comprenant les étapes suivantes :
- recevoir un flux unifilaire de produits au niveau d'un convoyage amont puis ;
- répartir le flux unifilaire de produits successivement sur au moins deux convoyages aval sous forme de lots longitudinaux ;
- amener lesdits lots dans une zone de prise grâce auxdits convoyages aval;
- ralentir lesdits convoyages aval au niveau de la zone de prise pour y ralentir les produits;
- transférer un lot de produits depuis au moins un convoyage aval au niveau de ladite zone de prise jusqu'à ladite surface d'accumulation ;
- transférer au moins un lot de produits depuis ladite surface d'accumulation jusqu'à au moins un convoyeur de sortie.

Le procédé se caractérise en ce que, pour au moins deux convoyages aval, le trajet pour amener un lot en zone de prise est plus long pour un convoyage aval que pour l'autre convoyage aval, de sorte à synchroniser l'arrivée en zone de prise de deux lots successifs, chacun circulant respectivement sur un convoyage aval.

Le procédé selon un aspect de l'invention peut présenter une ou plusieurs caractéristiques complémentaires parmi les suivantes, considérées individuellement ou selon toutes les combinaisons techniquement possibles.

Dans des modes de réalisation, le transfert d'un lot depuis au moins un convoyage aval au niveau de la zone de prise jusqu'à la surface d'accumulation est réalisé par un outil d'entrée et le transfert d'au moins un lot de produits depuis la surface d'accumulation jusqu'à au moins un convoyeur de sortie est réalisé par un outil de sortie.

Dans des modes de réalisation, le transfert entre, d'une part, au moins un convoyage aval en zone de prise jusqu'à la surface d'accumulation et, d'autre part, depuis ladite surface jusqu'audit au moins un convoyeur de sortie, est effectué par un moyen de transfert, ledit moyen de transfert comprenant une pluralité de poussoirs, chaque poussoir transférant au moins un lot de produits depuis au moins un convoyage aval en zone de prise jusqu'à ladite surface, faisant traverser ladite surface par ledit au moins un lot de produits et transférant ensuite ledit au moins un lot de produits depuis ladite surface jusqu'à au moins un convoyeur de sortie.

Selon une caractéristique additionnelle possible, au moins deux lots de produits sont transférés simultanément, chacun depuis l'un des convoyages aval au niveau de ladite zone de prise jusqu'à la surface d'accumulation.

Dans des modes de réalisation, les lots successifs, chacun circulant sur un des convoyages aval, présentent la même vitesse de convoyage.

**Brève description des figures** : L'invention sera mieux comprise grâce à la description ci-dessous, qui se base sur des modes de réalisations possibles, expliqués de façon illustrative et nullement limitative, en référence avec les figures annexées, dans lesquelles :
- [Fig. 1] représente schématiquement une vue du dessus d'un mode de réalisation d'une installation, montrant notamment deux convoyages aval, un convoyage aval étant plus long que l'autre convoyage aval ;
- [Fig. 2] représente schématiquement une vue de dessus d'un mode de réalisation d'une installation, montrant notamment une portion de voie indirecte mobile selon une direction longitudinale le long de portion de convoyage, de manière à régler la longueur totale de ladite voie indirecte ;
- [Fig. 3] représente schématiquement une vue de dessus d'un mode de réalisation d'une installation, montrant trois convoyages aval ;
- [Fig. 4] représente schématiquement une vue de dessus d'un mode de réalisation d'une installation, montrant deux paires de convoyage aval ;
- [Fig. 5] représente schématiquement une vue de dessus d'un deuxième mode de réalisation d'une installation, montrant notamment un convoyage aval aligné de façon parallèle avec le convoyage amont ;
- [Fig.6] représente schématiquement une vue en perspective d'un mode de réalisation d'une installation, montrant notamment un moyen de transfert sous forme d'une pluralité de poussoirs ;
- [Fig.7] représente schématiquement une vue de dessus de l'installation lors de la mise en oeuvre d'un procédé d'accumulation de produits, montrant une étape dudit procédé, dans laquelle un premier flux unifilaire de produits est dévié vers une voie indirecte ;
- [Fig.8] représente schématiquement une vue similaire à la figure 7, montrant une étape dudit procédé, dans laquelle un deuxième flux unifilaire de produits sous forme de lot est dévié vers une voie directe, pendant que le premier flux unifilaire de produits chemine le long de la voie indirecte ;
- [Fig.9] représente schématiquement une vue similaire à la figure 7, montrant une étape dudit procédé, dans laquelle les premier et deuxième flux unifilaires de produits cheminent le long des voies directes et indirectes alors qu'un troisième flux unifilaire de produits est aiguillé vers la voie indirecte,
- [Fig.10] représente schématiquement une vue similaire à la figure 7, montrant une étape dudit procédé, dans laquelle les premier et deuxième flux unifilaires de produits arrivent en même temps au niveau d'une zone de prise de l'installation ; et
- [Fig.11] représente schématiquement une vue similaire à la figure 7, montrant une étape dudit procédé, dans laquelle les premier et deuxième flux unifilaires sous forme de lots de produits sont transférés simultanément depuis les deux convoyages aval vers la surface d'accumulation.

**Description détaillée** : Dans la suite de la description, des éléments présentant une structure identique ou des fonctions analogues seront désignés par une même référence.

L'invention concerne d'abord une installation 100 d'accumulation et de transfert de produits 2. Les produits 2, du type bouteilles, flacons, caisses, boîtes en carton, sont convoyés entre différents postes de traitement au sein d'une ligne de conditionnement, par exemple par des tapis transporteurs sur lesquels ils reposent. Les produits 2 peuvent être tous orientés de la même façon ou non.

L'installation 100 comprend un dispositif 1 de convoyage des produits 2 en un flux unifilaire. On entend par flux unifilaire une circulation selon laquelle les produits 2 sont convoyés en file d'un seul produit 2 de large.

Le dispositif 1 de convoyage comprend un convoyage amont 10, au moins deux convoyages aval 11, 12 débouchant longitudinalement dans une zone de prise P et un système de division 13.

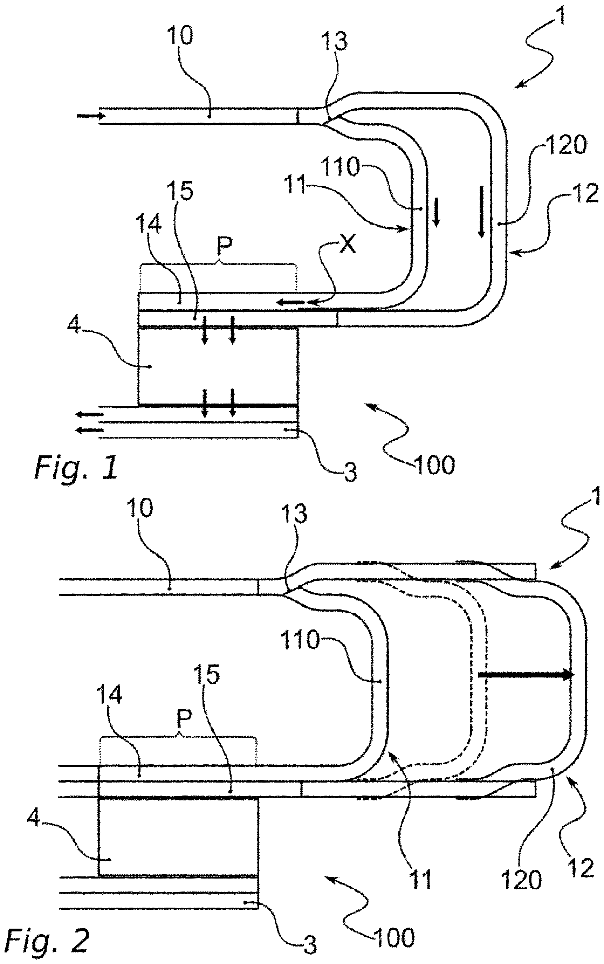

La figure 1 montre un mode de réalisation dans lequel l'installation 100 comprend deux convoyages aval 11 12, le convoyage aval 12 ayant une longueur plus importante que le convoyage aval 11, entre le système de division 13 et la zone de prise P.

Comme illustré en figure 1, les produits 2 circulent depuis un convoyage amont 10, et passent par un système de division 13. Le sens de déplacement des produits 2 est représenté par des flèches.

Le système de division 13 dévie au moins un premier flux unifilaire de produits 2 sous forme de lot vers un des au moins deux convoyages aval 11, 12. Ainsi, un premier groupe de produits 2, ledit groupe formant un lot, circule sur un des convoyages aval 11, 12, depuis le système de division 13 jusqu'à la zone de prise P. Le système de division 13 dévie ensuite au moins un deuxième flux unifilaire de produits 2 sous forme de lot vers un autre convoyage aval 11, 12.

Un lot de produits 2 comprend un nombre déterminé de produits 2, formant une file d'un seul produit 2 de large. En d'autres termes, un lot est un groupe de produits successifs, l'un derrière l'autre, obtenu par séquençage effectué par le système de division 13 du flux unifilaire de produits 2 en provenance du convoyage amont 10. Au niveau de la zone de prise P, le lot de produits s'étend longitudinalement sur un convoyage aval 11, 12.

Le système de division 13 dévie au moins un premier groupe de produits 2 sous forme de lot vers l'un des convoyages aval 11, 12 puis au moins un deuxième groupe de produits 2 sous forme de lot vers un autre convoyage aval 11,12.

Dans des modes de réalisation où l'installation 100 comprend au moins trois convoyages aval 11, 12, le système de division 13 dévie un troisième groupe de produits 2 sur un troisième convoyage aval, puis un quatrième groupe de produits 2 sur un quatrième convoyage aval, et ainsi de suite, autant de fois que nécessaire, c'est-à-dire sur autant de convoyages aval 11, 12 présents.

En d'autres termes, dans des modes de réalisation, le système de division 13 dévie successivement des groupes de produits 2 sous forme de lots depuis un convoyage amont 10 vers chacun des convoyages aval 11, 12 de l'installation 100.

Comme il sera décrit plus loin, selon les besoins de l'installation 100, tous les convoyages aval de l'installation 100 ne sont pas nécessairement mis en oeuvre au même moment. Il est tout à fait envisageable de définir des trajets pour les produits 2 qui n'impliquent pas l'utilisation de l'ensemble des convoyages aval de l'installation 100.

En d'autres termes, dans des modes de réalisation, le système de division 13 forme des groupes de produits 2 sous forme de lots successivement sur un nombre de convoyages aval 11, 12 inférieur au nombre total de convoyages aval 11, 12 de l'installation 100.

Dans des modes de réalisation, les groupes de produits 2 ainsi formés par le système de division 13 comprennent le même nombre de produits 2.

Dans des modes de réalisation, les groupes de produits 2 formés par le système de division 13 comprennent un nombre sensiblement différent de produits 2, avec une différence de un à cinq produits 2 entre les différents groupes.

Par exemple, dans des modes de réalisation où l'installation 100 comprend deux convoyages aval 11, 12, le premier groupe et le deuxième groupe de produits sont formés par un nombre sensiblement différent de produits 2, avec une différence de un à cinq produits 2 entre le premier et le deuxième groupe.

Selon une caractéristique additionnelle possible, le système de division 13 est un aiguillage. Dans des modes de réalisation, le système de division 13 est un déflecteur commandé qui dévie successivement un nombre déterminé de produits 2 formant ensemble un lot sur chacun des convoyages aval 11, 12 de l'installation 100.

Dans des modes de réalisation où l'installation 100 comprend deux convoyages aval 11, 12, le système de division 13 envoie donc depuis le convoyage amont 10 successivement et alternativement un premier flux unifilaire de produits 2 sous forme de lots vers un convoyage aval 11, 12 et un deuxième flux unifilaire de produits sous forme de lots vers l'autre convoyage aval 11, 12.

Selon un mode de réalisation préféré, l'installation 100 d'accumulation et de transfert de produits 2 comprend un dispositif 1 de convoyage desdits produits 2 en un flux unifilaire, ledit dispositif 1 comprenant un convoyage amont 10, deux convoyages aval 11, 12 débouchant longitudinalement dans une zone de prise P, et un système de division pour envoyer depuis ledit convoyage amont 10 successivement et alternativement un premier flux unifilaire de produits 2 sous forme de lots vers un convoyage aval 11, 12 et un deuxième flux unifilaire de produits 2 sous forme de lots vers l'autre convoyage aval 11, 12, au moins un convoyeur de sortie 3 desdits produits 2, une surface 4 d'accumulation pour recevoir les produits 2 sous forme de lots depuis la zone de prise P, ladite surface 4 étant située entre ledit dispositif 1 de convoyage et ledit au moins un convoyeur de sortie 3, et un moyen 5 de transfert pour déplacer transversalement au moins un lot de produits 2, d'une part, depuis au moins un desdits deux convoyage aval 11, 12 au niveau de la zone de prise P jusqu'à ladite surface 4 d'accumulation et, d'autre part, depuis ladite surface 4 jusqu'audit au moins un convoyeur de sortie 3, la longueur d'un convoyage aval 11 est plus grande que la longueur de l'autre convoyage aval 12 entre ledit système de division 13 et la zone de prise P, pour que deux lots de produits 2 formés successivement arrivent sensiblement au même moment au niveau de ladite zone de prise P.

Dans des modes de réalisation, le système de division 13 est sous la forme d'une plaque de poussée qui se déplace transversalement pour dévier successivement un nombre déterminé de produits 2 formant ensemble un lot sur chacun des convoyages aval 11, 12 de l'installation 100.

Chaque convoyage aval 11, 12 de l'installation 100 se voit donc attribuer un lot de produits 2 de manière successive et en alternance avec au moins un autre convoyage aval 11, 12. Le premier flux unifilaire forme donc une succession de lots de produits 2 sur un convoyage aval 11, 12 et le au moins deuxième flux unifilaire forme une succession de lots de produits 2 sur un autre convoyage aval 11, 12.

Avantageusement, entre le système de division 13 et la zone de prise P, pour au moins deux convoyages aval, la longueur d'un convoyage aval 11 est significativement plus grande que la longueur d'un autre convoyage aval 12.

La différence de longueur entre chaque convoyage aval 11,12, entre le système de division 13 et la zone de prise P, doit être suffisamment importante pour que l'avance initiale du premier lot soit compensée par la distance supplémentaire à effectuer sur le convoyage aval 12 pour ledit premier lot, au cours de son trajet depuis le système de division 13 jusqu'à l'arrivée du lot en zone de prise P. De cette manière, le retard pris par le au moins deuxième lot, formé à la suite du premier lot par le système de division 13, est compensé par le trajet plus court qu'il va effectuer sur un autre convoyage aval 11 depuis le système de division 13 jusqu'à son arrivée en zone de prise P.

De préférence, la différence de longueur entre au moins deux convoyages aval 11,12 tient également compte de la cadence de la ligne de conditionnement. En tout état de cause, les lots à former et à transférer en vue de leur accumulation sont des lots d'un grand nombre de produits, d'au moins quinze produits de préférence.

Plus particulièrement, dans des modes de réalisation, la différence de longueur entre deux convoyages aval 11, 12 est comprise entre 0.75 et 1.25 fois la longueur d'un groupe de produits 2 formant un lot. Un groupe de produits 2 formant un lot correspond à un groupe de produits 2 envoyé par le système de division 13 sur un des convoyages aval 11, 12 de l'installation 100. Par exemple, pour des groupes formant un train de vingt produits 2 à la suite du système de division 13, la différence de longueur entre deux convoyages aval 11, 12 sera comprise entre quinze et vingt-cinq produits 2, préférentiellement la différence de longueur sera de vingt produits 2. Cette différence de longueur dépend donc du nombre de produits 2 formant un lot, c'est-à-dire de la longueur d'un train de produits 2 (en fonction du type de produits 2 traités par la ligne de conditionnement).

Selon un mode de réalisation préférentiel, la différence de longueur entre deux convoyages aval 11, 12 est égale à la longueur d'un groupe de produits 2 formant un lot, c'est-à-dire à la longueur d'un train de produits 2.

La figure 1 montre un mode de réalisation dans lequel un convoyage aval 11 présente une voie directe 110 et l'autre convoyage aval 12 une voie indirecte 120. La longueur de la voie directe 110 est plus courte que la longueur de la voie indirecte 120. Cela signifie que le trajet à parcourir pour un lot de produits 2 circulant sur le convoyage aval 12 est significativement plus long, en termes de distance, que le trajet à parcourir pour un lot de produits 2 circulant sur le convoyage aval 11. De cette manière, un premier lot envoyé sur le convoyage aval 12 présentant la voie indirecte 120 effectue un trajet plus long qu'un deuxième lot envoyé sur le convoyage aval 11 présentant la voie directe 110. De la sorte, bien que les lots ne soient pas envoyés au même moment mais successivement par le système de division 13 sur chaque convoyeur aval 11, 12, lesdits lots successifs arrivent au même moment au niveau d'une zone de prise P. Cela est particulièrement avantageux car permet un transfert simultané de deux lots longitudinaux de produits 2, depuis la zone de prise P jusqu'à une surface 4 d'accumulation.

L'installation 100 comprend aussi au moins un convoyeur de sortie 3 des produits 2, et une surface 4 d'accumulation pour recevoir les produits 2 sous forme de lots depuis la zone de prise P. La surface 4 d'accumulation est située entre le dispositif 1 de convoyage et le au moins un convoyeur de sortie 3.

Plus avant, la surface 4 d'accumulation se situe entre les au moins deux convoyages aval 11, 12, au niveau de la zone de prise P, et au moins un convoyeur de sortie 3. La surface 4 d'accumulation permet de gérer les différences entre les flux de deux postes successifs de la ligne de conditionnement, entre lesquels elle est positionnée et qui présente alors une capacité d'accumulation adaptée.

La surface 4 d'accumulation présente une forme rectangulaire, les produits 2 étant alimentés sur elle depuis l'un de ses côtés, et sortis depuis l'autre côté, de préférence depuis le côté opposé.

La surface 4 d'accumulation reçoit des produits 2 sous forme de lots longitudinaux, pour absorber le flux continu de produits 2 provenant du convoyage amont 10.

L'alimentation de la surface 4 d'accumulation se fait donc depuis les au moins deux convoyages aval 11, 12, au niveau de la zone de prise P. Avantageusement, un des convoyages aval 11, 12, s'étend le long de la surface 4 d'accumulation. Plus précisément, comme visible en figure 2, une portion d'alimentation 14, 15 d'un convoyage aval 11, 12, borde un bord de la surface 4 d'accumulation. Cette configuration permet un transfert transversal d'un lot longitudinal de produits 2, par exemple d'un lot formé par au moins quinze produits 2 directement depuis au moins un convoyage aval 11, 12 jusqu'à la surface 4 d'accumulation, ce qui favorise une alimentation rapide et aisée de ladite surface 4.

De préférence, le au moins un convoyeur de sortie 3 s'étend le long du bord opposé de la surface 4 d'accumulation. En d'autres termes, de manière préférée, un des convoyages aval 11, 12 de l'installation 100 s'étend contre un bord de la surface 4 d'accumulation et au moins un convoyeur de sortie 3 s'étend le long du bord opposé de ladite surface 4, les au moins deux convoyages aval 11, 12 et le au moins un convoyeur de sortie 3 s'étendant donc parallèlement et bordant la surface 4 d'accumulation.

Selon une caractéristique additionnelle possible, visible en figure 1 ou 2, le convoyage amont 10 s'étend parallèlement aux convoyages aval 11, 12 au niveau de la zone de prise P. Dans des modes de réalisation, au niveau de la zone de prise P, les au moins deux convoyages aval 11, 12 s'étendent longitudinalement et sont l'un contre l'autre, directement ou indirectement. En d'autres termes, selon un mode de réalisation préféré, les au moins deux convoyages aval 11, 12 s'étendent parallèlement l'un contre l'autre de manière directe, c'est-à-dire qu'il n'y a pas de surface de transit, ou zone morte, entre les au moins deux convoyages aval 11, 12 en zone de prise P. Cela est particulièrement avantageux car favorise une installation 100 compacte.

Dans un mode de réalisation préféré, au moins deux convoyages aval 11, 12 présentent la même direction de convoyage X et les produits 2 circulent dans le même sens.

La figure 1 montre un tel mode de réalisation, dans le cas où l'installation 100 comprend deux convoyages aval 11, 12.

De manière avantageuse, pour au moins deux convoyages aval 11, 12, le convoyage aval 12 qui présente la voie indirecte 120, s'étend le long d'un bord de la surface 4 d'accumulation, de préférence contre ledit bord, tandis que le convoyage aval 11, qui présente la voie directe 110, s'étend le long du convoyage aval 12. Cette configuration permet de réduire l'emprise au sol de l'installation 100.

Selon une autre variante, pour au moins deux convoyages aval 11, 12 le convoyage aval 11, qui présente la voie directe 110, s'étend le long d'un bord de la surface 4 d'accumulation, de préférence contre ledit bord, tandis que le convoyage aval 12, qui présente la voie indirecte 120, s'étend le long du convoyage aval 11.

La surface 4 d'accumulation peut être une plaque morte ou être formée par une bande transporteuse, dont la direction de convoyage s'étendant orthogonalement par rapport à la direction de convoyage X des produits 2 circulant sur les au moins deux convoyages aval 11, 12 au niveau de la zone de prise P.

La figure 1 montre un mode de réalisation, selon lequel les convoyages aval 11, 12 sont en forme de U. Dans cette configuration, le convoyage aval 11, qui présente la voie directe 110, est en forme d'un U qui entoure en partie la forme en U de la voie indirecte 120 du convoyage aval 12. Ainsi, les circuits de convoyage formés par la voie directe 110 et par la voie indirecte 120 sont imbriqués l'un dans l'autre et permettent de limiter l'emprise au sol de l'installation 100. Aussi, cela permet de contrôler plus précisément, lors de la phase d'ingénierie, les distances de chaque trajet de convoyage et les effets des frottements, les formes des deux convoyages aval 11, 12 étant similaires et complémentaires.

Il est entendu que les convoyages aval peuvent prendre différentes formes, par exemple prendre une forme globale de Z lorsque l'installation 100 est vue du dessus.

Selon une caractéristique additionnelle possible, au moins deux des convoyages aval 11, 12 de l'installation présentent la même forme ou une forme différente, selon une vue du dessus de l'installation 100.

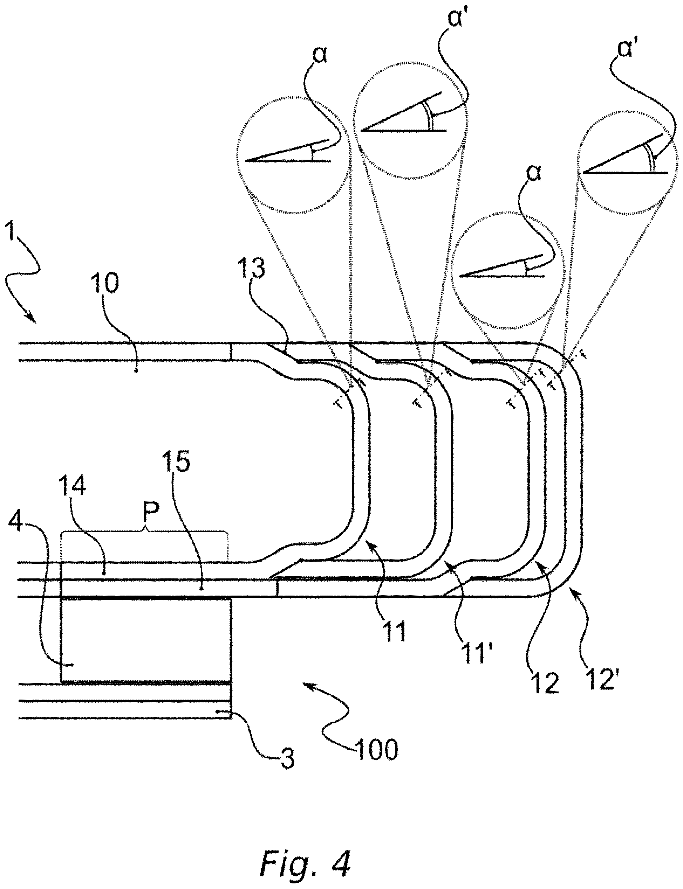

Selon une caractéristique additionnelle possible, visible notamment en figure 4, au moins un convoyage aval 11 est aligné longitudinalement avec le système de division 13, dans la prolongation du convoyage amont 10.

Selon une caractéristique additionnelle possible, la longueur d'au moins un convoyage aval 11, 12, entre le système de division 13 et la zone de prise P, est réglable. En d'autres termes, la longueur de la voie directe 110 et/ou la longueur de la voie indirecte 120 est réglable. Ce mode de réalisation est particulièrement avantageux, et contribue à la versatilité de l'installation 100, dans la mesure où la différence de longueur pour au moins deux convoyages aval 11, 12 doit permettre la synchronisation des lots de produits 2 en zone de prise P. Ainsi, en cas notamment de changement de type de produits 2 ou de cadence, ou encore de longueur de lots de produits 2, il est possible d'ajuster la différence de longueur entre au moins deux convoyages aval 11, 12.

Dans des modes de réalisation, la longueur d'au moins un convoyage aval 11, 12, entre le système de division 13 et la zone de prise P, est réglable en fixant de manière amovible la voie directe 110 et/ou ladite voie indirecte 120 à différents points du convoyage aval 11, 12 entre le système de division 13 et la zone de prise P. Selon un mode de réalisation non limitatif, la voie directe 110 et/ou la voie indirecte 120 a, à au moins une extrémité, des moyens de fixation, pour venir se fixer sur des supports prévus à cet effet, à différents emplacements sur les glissières des convoyages aval 11, 12. Diverses configurations sont connues comme moyens pour commuter les voies de transport pour les produits 2 et ajuster des longueurs de bande de convoyage, par exemple dans la demande de brevet EP3786093 ou encore dans le brevet EP2451732B1.

La figure 2 illustre un mode de réalisation selon lequel la longueur de la voie indirecte 120 du convoyage aval 12 est réglable. Le convoyage aval 12 présente, entre le système de division 13 et la zone de prise P, une longueur qu'il est possible d'ajuster en fonction des besoins de la ligne de conditionnement. En particulier, il est avantageux de pouvoir modifier la longueur du trajet de convoyage en fonction de la cadence de production des produits 2 à traiter.

La figure 2 montre un exemple selon lequel la voie en pointillé a été déplacée vers la droite, afin de prolonger la longueur de trajet des produits 2 envoyés par le système de division 13 sur le convoyage aval 12. Ainsi, la voie indirecte 120 comprend des moyens de fixation, à fixer sur des supports placés à différents endroits du convoyage aval 12, après le système de division 13 et avant la zone de prise P, de manière à réduire ou rallonger la distance à parcourir pour les produits 2 circulant sous forme de lots successifs. Cela permet une grande versatilité de l'installation 100, qui peut s'adapter aux différentes cadences et donc gérer, transférer et accumuler des produits 2 venant en flux continu depuis un convoyage amont 10 avec un temps de cycle optimisé.

En outre, le fait de disposer de voies dont la longueur est réglable permet avantageusement d'adapter la longueur de chaque lot de produits 2, c'est-à-dire d'adapter le nombre de produits 2 constituant un lot en fonction de la longueur de chaque convoyage aval 11, 12 de l'installation 100.

Cette versatilité peut également être obtenue selon d'autres modes de réalisation. En effet, comme décrit précédemment, dans des modes de réalisation, l'installation 100 comprend une pluralité de convoyages aval 11, 12.

Dans des modes de réalisation, l'installation 100 met en oeuvre les différents convoyages aval 11, 12 pour faire circuler les produits 2 en provenance du convoyage amont 10.

Plus avant, entre le système de division 13 et la zone de prise P, la longueur d'un convoyage aval 12 est plus grande que la longueur d'au moins un autre convoyage aval 11.

De manière préférée, pour au moins deux convoyages aval 11, 12, entre le système de division 13 et la zone de prise P, la longueur d'un convoyage aval 12 est plus grande d'au moins un autre convoyage aval 11, la sur-longueur du convoyage aval correspondant à une longueur comprise entre 0.75 et 1.25 fois la longueur d'un train de produits 2, c'est-à-dire d'un groupe de produits 2 formé par le système de division 13.

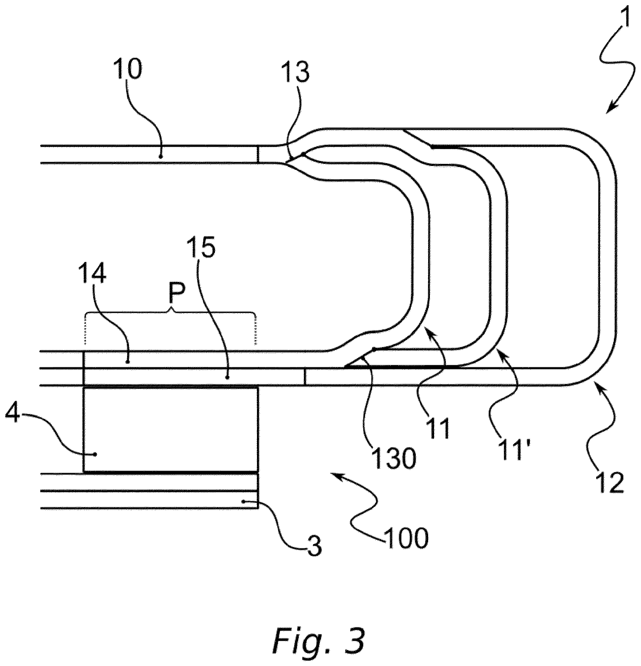

La figure 3 illustre un mode de réalisation selon lequel l'installation comprend trois convoyages aval 11, 11' et 12, chacun des trois convoyages aval 11, 11' et 12 ayant une longueur différente.

Dans cette configuration, le système de division 13 peut former un premier flux unifilaire sous forme de lots de produits 2 sur le convoyage 12, un deuxième flux unifilaire sous forme de lots sur le convoyage 11 ', et un troisième flux unifilaire sur le convoyage aval 11. Cet ordre d'envoi est purement illustratif.

Selon une caractéristique additionnelle possible, l'installation 100 ne met pas en oeuvre l'ensemble des convoyages aval 11, 12 pour faire circuler les produits 2 en provenance du convoyage amont 10. En d'autres termes, en fonction des besoins de l'installation, tels que le type de produit 2, ou encore la cadence de production, l'installation 100 ne met en oeuvre qu'une partie de la pluralité des convoyages aval 11, 12.

Ainsi, si l'on reprend l'exemple de la figure 3, le système de division 13 peut former des lots successifs de produits 2 par exemple sur seulement deux des convoyages aval 11, 11' et 12. En d'autres termes, des flux unifilaires de produits 2 seront uniquement envoyés successivement et alternativement sur les convoyages aval 11, 12, ou sur les convoyages aval 11', 12, ou encore sur les convoyages aval 11, 11', cela en fonction des besoins de l'installation 100, et en particulier selon le type de produit 2.

Pour ce faire, dans des modes de réalisation, l'installation 100 comprend un système de guidage 130 mobile, sous la forme notamment d'une plaque, afin d'accompagner les produits 2 au niveau de leur arrivée en zone de prise P.

Par type de produit 2, on entend des caractéristiques liées à la nature du produit, par exemple la matière (verre, PET, carton) du produit 2, ou encore sa forme, ses dimensions ou son poids. Selon un exemple illustratif, visible en figure 4, l'installation 100 comprend deux paires de convoyages aval 11, 12, 11', 12', chacun des convoyages aval ayant une longueur différente. En fonction des besoins de l'installation 100, une paire de convoyages aval est mise en oeuvre en fonction du type de produit 2 à traiter. En d'autres termes, le système de division 13 envoie des produits 2 sous forme de lot successivement et alternativement sur deux convoyages aval 11, 12, 11', 12' d'une même paire.

En effet, il peut être avantageux de modifier les longueurs de trajet de lots de produits 2 circulant entre le système de division 13 et la zone de prise P, en fonction notamment des cadences de production ou des types de produits 2. Cela permet de synchroniser au mieux l'arrivée des lots de produits 2 en zone de prise P, afin que lesdits lots arrivent sensiblement au même moment, ce qui facilite leur transfert sur la surface 4 d'accumulation.

Comme illustré sur les différentes figures, un convoyage aval 11, 12 présente des sections droites et des sections courbes sur le plan horizontal.

Selon une caractéristique additionnelle possible, un convoyage aval 11, 12 est unifilaire ou multifilaire au niveau de la zone de prise P.

Dans des modes de réalisation, au moins un convoyage aval 11, 12 comprend des guides latéraux pour guider les produits 2 et empêcher leur chute, notamment dans les portions courbes et virages. De préférence, ces guides latéraux sont réglables en largeur pour pouvoir s'adapter au type de produits 2.

Dans des modes de réalisation, un convoyage aval 11, 12, présente un angle d'inclinaison par rapport au plan horizontal au niveau d'une courbe ou virage afin de contrer les effets de la force centrifuge sur les produits 2. En d'autres termes, toute ou partie d'une courbe d'un convoyage aval 11, 12 présente un angle d'inclinaison par rapport au plan horizontal formant une pente décroissante transversalement à la direction de convoyage X. En somme, le point le plus haut se trouve à l'extérieur du virage et le point le plus bas à l'intérieur du virage. Ainsi, selon différents modes de réalisation, le dispositif 1 de convoyage peut être dépourvu de guides latéraux, sans que les produits 2 chutent. En outre, l'absence de guides latéraux permet d'éviter des frottements, ce qui peut provoquer des ralentissements des produits 2 et par conséquent causer des problèmes de synchronisation de l'arrivée des lots en zone de prise P.

Selon le type de produits 2, les cadences de production et selon le rayon de courbure du virage ou de la section courbe, la force appliquée sur lesdits produits 2 dans les courbes et virages est différente. Ainsi, le fait d'avoir plusieurs convoyages aval 11, 12, permet de pallier ce problème en proposant différentes configurations.

Ainsi, selon une caractéristique possible additionnelle, l'installation 100 comprend au moins deux paires de convoyage aval 11, 12, 11', 12'. Pour chaque paire de convoyage aval, chacun des convoyages aval présente un angle d'inclinaison a différent par rapport au plan horizontal, cet angle d'inclinaison α étant compris entre 0 et 30 degrés, de préférence entre 5 et 15 degrés. Cela permet avantageusement de mettre en oeuvre l'une ou l'autre paire de convoyages aval en fonction du type de produits 2.

Selon un mode de réalisation, l'angle d'inclinaison α d'un convoyage aval 11, 12 est supérieur à l'angle d'inclinaison α' d'un autre convoyage aval 11', 12', ou inversement.

Ce mode de réalisation est illustré en figure 4, où l'on peut voir deux paires de convoyage aval 11, 12, 11', 12'. Dans ce mode de réalisation, de manière préférée, seule une paire de convoyage aval est mise en oeuvre, selon les besoins de l'installation 100.

Dans des modes de réalisation, l'installation 100 comprend un système de guidage 130 mobile, pour accompagner les produits 2 lors de leur arrivée en zone de prise P.

Le transfert des produits 2 au niveau de la zone de prise P, depuis au moins un convoyage aval 11, 12 jusqu'à la surface 4 d'accumulation se fait grâce à un moyen de transfert 5 qui déplace les produits 2 par lot longitudinal, dans une direction de mouvement qui est transversale à la direction de convoyage X des au moins deux convoyages aval 11, 12 en zone de prise P.

On comprend qu'un lot de produits 2 transféré depuis la zone de prise P jusqu'à la surface 4 d'accumulation correspond à un lot de produits 2 formé par le système de division 13. En d'autres termes, tous les produits 2 envoyés sur un des convoyages aval 11, 12 de l'installation par le système de division 13 sous forme de lots sont ensuite transférés depuis la zone de prise P jusqu'à la surface 4 d'accumulation.

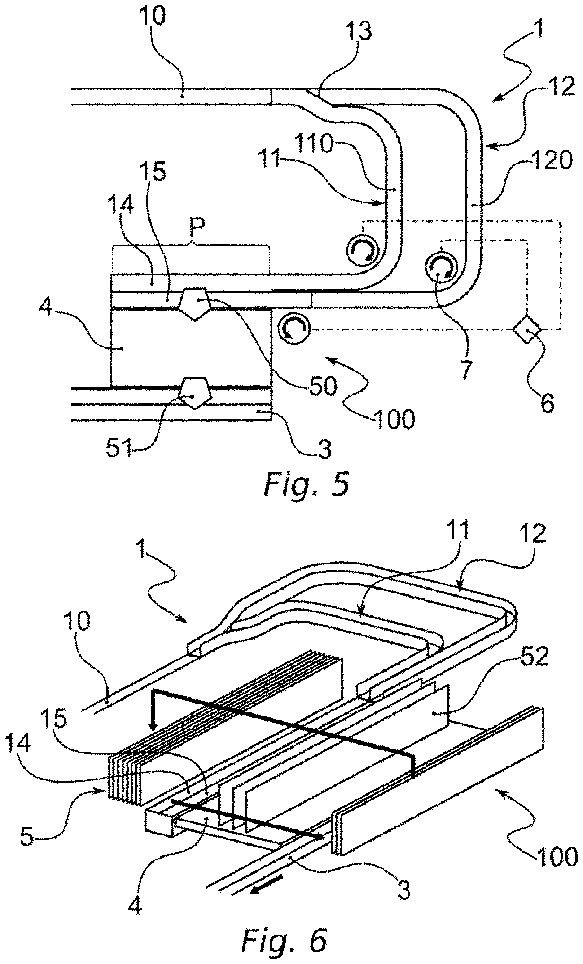

Dans des modes de réalisation, l'installation 100 comprend un moyen de transfert 5, ledit moyen de transfert 5 comprenant un moyen d'entrée 50 et un moyen de sortie 51. Ce mode de réalisation est illustré en figure 5. Le moyen d'entrée 50 effectue le transfert depuis au moins un convoyage aval 11, 12, au niveau de la zone de prise P jusqu'à la surface 4 d'accumulation. Ce mouvement d'alimentation est préférablement un mouvement de poussée d'au moins un groupe de produits 2 sous la forme de lot longitudinal depuis un convoyage d'amenée 11, 12, au niveau de la zone de prise P, jusqu'à la surface 4 d'accumulation.

Le moyen d'entrée 50 et le moyen de sortie 51 sont conçus préférentiellement pour s'étendre tout le long d'un côté extérieur du lot de produits 2 à transférer.

Selon une caractéristique technique additionnelle, le moyen de transfert 5 est mobile verticalement et s'escamote après le transfert des produits 2, pour revenir dans sa position initiale en zone de prise, et donc pour passer au-dessus des produits 2 qui circulent sur les convoyages aval 11, 12.

Selon une caractéristique additionnelle possible, le moyen de transfert 5 comprend au moins deux parois pour transférer simultanément, depuis la zone de prise P jusqu'à la surface 4 d'accumulation, au moins deux lots longitudinaux de produits 2, chacun des lots se situant sur l'un des convoyages aval 11, 12. En d'autres termes, le moyen de transfert 5, et en particulier le moyen d'entrée 50, se saisit d'un lot de produits 2 sur le convoyage aval 11 et d'un lot de produits 2 sur le convoyage aval 12, et le cas échéant d'un lot de produits 2 sur au moins un autre convoyage aval, pour les transférer de manière simultanée jusqu'à la surface 4 d'accumulation.

Ainsi, dans des cas où l'installation 100 comprend deux convoyages aval 11, 12, le moyen d'entrée 50 transfère simultanément deux lots de produits 2 depuis la zone de prise P jusqu'à la surface 4 d'accumulation.

Avantageusement, le moyen de transfert 5 comprend au moins trois plaques verticales, une des plaques servant de plaque de protection pour éviter la chute des produits 2 lors de leur transfert transversal sous forme de lot.

Sur la surface 4 d'accumulation, les lots de produits 2 forment des rangées. Le moyen de sortie 51 effectue le transfert depuis la surface 4 d'accumulation jusqu'à au moins un convoyeur de sortie 3. Le moyen de sortie 51 peut transférer un ou plusieurs lots de produits 2, c'est-à-dire un ou plusieurs rangées, simultanément. En effet, le convoyeur de sortie 3 peut être unifilaire ou multifilaire. La sortie peut également comprendre plusieurs convoyeurs de sortie 3, par exemple deux convoyeurs de sortie 3, comme visible en figure 1.

Dans des modes de réalisation, comme visible notamment en figure 6, le moyen de transfert 5 comprend une pluralité de poussoirs 52. Chaque poussoir 52 accompagne au moins un lot de produits 2 depuis un convoyage aval 11, 12 au niveau d'une zone de prise jusqu'à au moins un convoyeur de sortie 3. En d'autres termes, chaque poussoir 52 se déplace depuis la zone de prise P jusqu'à au moins un convoyeur de sortie 3, et traverse donc entièrement la surface 4 d'accumulation, d'un bord à un autre.

Cette caractéristique est très avantageuse car permet de limiter le risque de chute des produits 2, un seul poussoir 52 accompagnant au moins un lot de produits 2 depuis l'entrée de la surface 4 d'accumulation jusqu'à sa sortie.

Dans des modes de réalisation, les convoyages aval 11, 12 de l'installation 100 ont le même système d'entraînement. En effet, pour au moins deux convoyages aval 11, 12, la différence de longueur entre les convoyages aval 11, 12 permet de synchroniser l'arrivée des lots successifs de produits 2, de telle sorte qu'un lot de produits 2 circulant sur le convoyage aval 12, via la voie indirecte 120, arrive au même moment, sensiblement simultanément, qu'un lot de produits 2 circulant sur le convoyage aval 11, via la voie directe 110. Ainsi, les deux convoyages aval 11, 12 peuvent présenter la même vitesse de convoyage, et la différence de longueur de la voie directe 110 et de la voie indirecte 120 permet à elle seule la synchronisation de l'arrivée des lots de produits 2 sur chacun des convoyeurs aval 11, 12.

Un système d'entraînement comprend au moins un moteur 7. Un système d'entraînement comprend un ou plusieurs moteurs 7. En effet, selon la longueur d'un convoyage, il peut être nécessaire d'utiliser plusieurs moteurs 7. En outre, un seul moteur 7 peut entraîner différentes bandes de convoyage.

Dans des modes de réalisation, un moteur 7 peut comprendre différents embrayages pour entraîner différentes bandes de convoyage.

Selon une caractéristique additionnelle possible, chacun des convoyages aval 11, 12 a au moins un moteur 7 qui lui est propre.

Dans des modes de réalisation, l'installation 100 comprend encore une unité 6 de contrôle, représentée schématiquement en figure 5. L'unité 6 de contrôle commande la vitesse de convoyage d'au moins un des convoyages aval 11, 12 pour synchroniser l'arrivée des premier et au moins deuxième flux unifilaires de produits 2 sous forme de lot en zone de prise P.

De manière avantageuse, l'unité 6 de contrôle comprend différents capteurs, notamment des capteurs de vitesse, et une base de données dans laquelle sont stockées différentes informations concernant la ligne de conditionnement. Par exemple, la base de données de l'unité 6 de contrôle enregistre les paramètres de vitesse de convoyage des au moins deux convoyages aval 11, 12, du convoyage amont 10, et du au moins un convoyeur de sortie 3. La base de données peut également comprendre des informations sur la nature des produits 2 à traiter sur la ligne de conditionnement. La base de données est enregistrée dans un dispositif mémoire de l'unité 6 de contrôle ou stockée sur un serveur indépendant. Selon une caractéristique additionnelle possible, l'unité 6 de contrôle est également reliée au système de division 13, afin de connaître précisément les informations temporelles du passage de chaque produit 2 de chaque lot sur chacun des convoyages aval 11, 12, par exemple via l'utilisation d'un capteur de passage.

L'unité 6 de contrôle, à partir des données enregistrées dans la base de données, et/ou à partir des données obtenues par les différents capteurs, est apte à estimer le moment de l'arrivée en zone de prise P du premier flux et du au moins deuxième flux unifilaires de produits 2 passé par le système de division 13.

L'unité 6 de contrôle est donc reliée aux différents éléments de l'installation 100, et en particulier à au moins un système d'entraînement des convoyages aval 11, 12. Elle peut être reliée de manière filaire ou non, par tout moyen de communication bien connu de l'homme du métier.

Plus avant, selon une caractéristique additionnelle possible, au moins un convoyage aval 11, 12, comprend deux bandes de convoyages l'une à la suite de l'autre, chacune des deux bandes ayant un moteur 7 d'entraînement qui lui est propre, pour que les vitesses de convoyages des deux bandes d'un même convoyage aval 11, 12, puissent être différentes. Cela permet avantageusement de pouvoir arrêter ou ralentir les produits 2 arrivant en zone de prise P sur un convoyage aval, tout en permettant au système de division 13 de distribuer des produits 2 sous forme de lot sur l'autre bande de convoyage du convoyage aval pourtant arrêté en zone de prise. De cette manière, il est possible d'approvisionner en continu les convoyages aval 11, 12 et le flux du poste en amont n'est pas altéré, et la performance de la ligne de conditionnement de produits 2 n'est pas impactée. En outre, les produits 2 sont transférés sous forme de lots en toute sécurité, ne subissent pas de choc. En effet, un transfert transversal à pleine vitesse en zone de prise P n'est pas envisageable.

Dans des modes de réalisation, un convoyage aval 11, 12 comprend deux bandes de convoyages l'une à la suite de l'autre, alimentées par un même moteur 7 d'entraînement qui comprend deux transmissions, pour que les vitesses de convoyages des deux bandes d'un même convoyage aval 11, 12, puissent être différentes.

Selon une caractéristique additionnelle possible, les deux bandes du au moins un convoyage aval 11, 12 sont aboutées et alignées longitudinalement.

Dans des modes de réalisation, la jonction entre deux bandes successives et alignées d'un convoyage aval 11, 12 est réalisée par une plaque de transfert. L'utilisation d'une telle plaque de transfert est particulièrement utile lorsque les produits 2 sont des récipients. Toutefois, cette plaque de transfert n'est pas toujours nécessaire, notamment lorsque les produits 2 sont des boites, ou des produits 2 dont la stabilité est importante.

Selon une autre variante les deux bandes du convoyage aval 11, 12 ne sont pas alignées longitudinalement, mais décalées l'une par rapport à l'autre. Dans ce cas, le convoyage aval 11, 12 comprend un guide, sous la forme d'au moins une glissière de guidage, pour accompagner le passage des produits 2 d'une bande à l'autre dudit convoyage aval 11, 12.

Dans des modes de réalisation, le convoyage aval 11 comprend deux bandes de convoyage, une bande de convoyage sous la forme d'une portion d'alimentation 14, au niveau de la zone de prise P ; et une bande de convoyage sous la forme de la voie directe 110, la portion d'alimentation 14 et la voie directe 110 ayant chacune un moteur 7 d'entraînement qui lui est propre.

Dans des modes de réalisation, le convoyage aval 12 comprend deux bandes de convoyage, une bande de convoyage sous la forme d'une portion d'alimentation 15, au niveau de la zone de prise P, et une bande de convoyage sous la forme de la voie indirecte 120, la portion d'alimentation 15 et la voie indirecte 120 ayant chacune un moteur 7 qui lui est propre.

La figure 5 montre un mode de réalisation selon lequel, pour deux convoyages aval 11, 12, le convoyage aval 11 est alimenté par un système d'entrainement comprenant un seul moteur 7, tandis que le convoyage aval 12 comprend un système d'entraînement comprenant deux moteurs 7, un moteur 7 pour alimenter la voie indirecte 120 et un moteur 7 pour alimenter la portion d'alimentation 15 au niveau de la zone de prise P. Ce mode de réalisation permet avantageusement au convoyage aval 12 de présenter différentes vitesses de convoyage au niveau de la portion d'alimentation 15 et au niveau de la voie indirecte 120. En particulier, cela permet à la fois d'éviter un arrêt de la ligne de conditionnement et l'utilisation d'une plaque morte ou zone d'attente, lors du transfert des produits 2 depuis la zone de prise P jusqu'à la surface 4 d'accumulation. En effet, il est possible, sans difficulté aucune, de ralentir voire d'arrêter les produits 2 qui débouchent en zone de prise P sur les convoyages aval 11, 12, tout en alimentant la voie indirecte 120 de produits 2 via le système de division 13. La commande des différentes vitesses de convoyage est préférablement effectuée par l'unité 6 de contrôle.

Cet exemple est purement illustratif et non limitatif.

L'invention concerne encore un procédé d'accumulation et de transfert de produits 2 dans une ligne de conditionnement. Le procédé selon l'invention comprend les étapes suivantes :
- recevoir un flux unifilaire de produits 2 au niveau d'un convoyage amont 10 puis ;
- répartir le flux unifilaire de produits 2 successivement sur au moins deux convoyages aval 11, 12 sous forme de lots longitudinaux ;
- amener lesdits lots dans une zone de prise P grâce aux convoyages aval 11, 12;
- ralentir lesdits au moins deux convoyages aval 11, 12 au niveau de la zone de prise P pour y ralentir les produits 2;
- transférer un lot de produits 2 depuis au moins un convoyage aval 11, 12 au niveau de ladite zone de prise P jusqu'à ladite surface 4 d'accumulation ;
- transférer au moins un lot de produits 2 depuis ladite surface 4 d'accumulation jusqu'à au moins un convoyeur de sortie 3.

Le procédé se caractérise en ce que, pour au moins deux convoyages aval 11, 12, le trajet pour amener un lot en zone de prise P est plus long pour un convoyage aval 11, 12 que pour l'autre convoyage aval 11, 12.

Dans des modes de réalisation, le procédé d'accumulation et de transfert de produits 2 dans une ligne de conditionnement comprend les étapes suivantes :
- recevoir un flux unifilaire de produits 2 au niveau d'un convoyage amont 10 puis ;
- répartir le flux unifilaire de produits 2 alternativement et successivement sur deux convoyages aval 11, 12 sous forme de lots longitudinaux ;
- amener lesdits lots dans une zone de prise P grâce aux convoyages aval 11, 12 ;
- ralentir lesdits convoyages aval 11, 12 au niveau de la zone de prise P pour y ralentir les produits 2;
- transférer un lot de produits 2 depuis au moins un convoyage aval 11, 12 au niveau de ladite zone de prise P jusqu'à ladite surface 4 d'accumulation ;
- transférer au moins un lot de produits (2) depuis ladite surface (4) d'accumulation jusqu'à au moins un convoyeur de sortie 3,
procédé caractérisé en ce que :
- le trajet pour amener un lot en zone de prise P est plus long pour un convoyage aval 11, 12 que pour l'autre convoyage aval 11,1), pour synchroniser l'arrivée en zone de prise P de deux lots successifs, chacun circulant respectivement sur un convoyage aval 11 ,12.

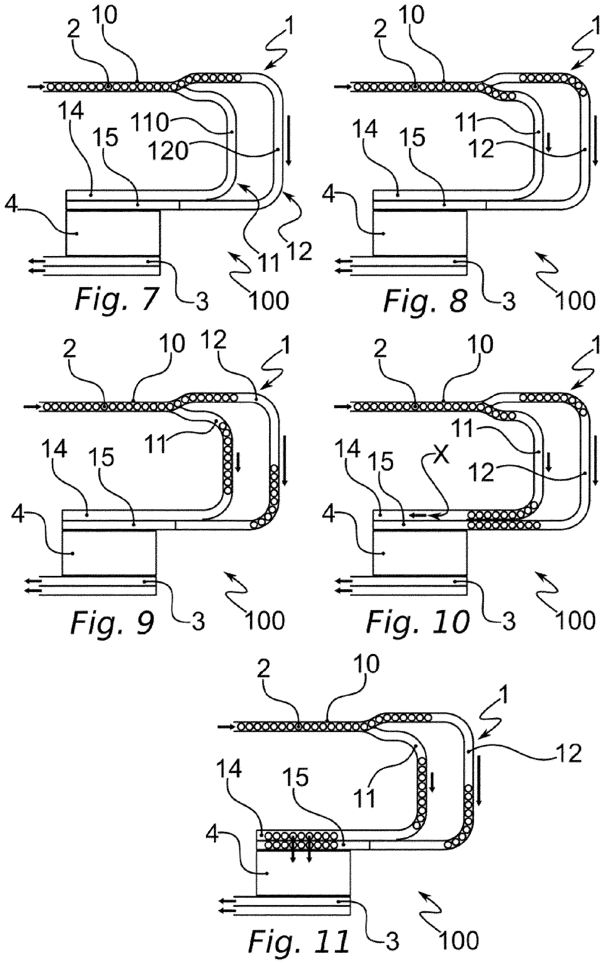

Nous allons décrire différentes étapes du procédé à l'aide des figures 7 à 11, pour une installation 100 qui comprend deux convoyages aval 11, 12, étant entendu que le même procédé s'applique pour des installations 100 qui comprennent au moins trois convoyages aval 11, 12.

La figure 7 montre l'étape de répartition du flux unifilaire de produits 2 vers un convoyage aval 12 qui présente une voie indirecte 120 de convoyage. Le système de division 13 dévie donc un premier flux unifilaire de produits 2 sous forme de lot en provenance du convoyage amont 10 vers le convoyage aval 12 le plus long. Il est tout à fait envisageable pour le système de division 13 de dévier en premier lieu le flux unifilaire de produits 2 vers le convoyage aval le plus court et cet exemple est purement illustratif et non limitatif.

Un convoyage aval 12 plus long signifie que la distance à parcourir pour un groupe de produits 2 sous forme de lot sur ledit convoyage aval 12, via la voie indirecte 120, est significativement plus longue que la distance à parcourir pour un groupe des produits 2 sous forme de lot sur l'autre convoyage aval 11, via la voie directe 110.

Le terme longueur exprime donc une longueur en termes de distance et non en termes de durée.

Dans des modes de réalisation préférés, la différence de longueur entre au moins deux convoyages aval 11, 12 est comprise entre 0.75 et 1.25 fois la longueur d'un train de produits 2, correspondant à la longueur d'un lot de produits 2 formé par le système de division 13 et envoyé sur un des convoyages aval 11, 12 de l'installation 100.

La figure 8 illustre la même étape de répartition du flux unifilaire de produits 2, le système de division 13 dirigeant un deuxième flux unifilaire de produits 2 sous forme de lot en provenance du convoyage amont 10 vers le convoyage aval 11 le plus court. De la même manière que précédemment, il est tout à fait envisageable pour le système de division 13 de dévier en second lieu le flux unifilaire de produits 2 vers le convoyage aval le plus long et cet exemple est purement illustratif et non limitatif.

On comprend donc que le premier flux unifilaire de produits 2 a été envoyé sur le convoyage aval 12 en premier, et que le premier produit 2 du premier lot est dévié par le système de division 13 significativement plus tôt que le premier produit 2 du deuxième lot. Au moment de la création des lots par le système de division 13, l'écart de distance qui sépare l'arrivée d'un premier produit de chaque lot en zone de prise P est considérable, et le premier lot formé par le premier flux unifilaire de produits 2 a de l'avance, tout au moins en terme chronologique, sur le deuxième lot formé par le deuxième flux unifilaire.

On comprend que, dans des cas où l'installation 100 comprend au moins trois convoyages aval 11, 12, et dans lesquels l'ensemble des convoyages aval 11, 12 sont en fonctionnement, le système de division 13 envoie successivement un flux unifilaire de produits 2 sous forme de lot sur chacun des convoyages aval 11, 12, chacun des lots de produits 2 parcourant un trajet d'une distance différente, de telle manière que les lots de produits 2 formés successivement, et circulant sur des convoyages aval distincts, arrivent sensiblement au même moment en zone de prise P.

La figure 9 illustre une nouvelle étape de répartition du flux unifilaire de produits 2. Pour des soucis de compréhension, il est rappelé qu'il est ici décrit un fonctionnement pour deux convoyages aval 11, 12 mais le même principe fonctionne quel que soit le nombre de convoyages aval 11, 12 en fonctionnement.

Dans cette étape, le système de division 13 dévie successivement et alternativement des groupes d'un nombre déterminé de produits 2 sous forme de lots, vers l'un ou l'autre des convoyages aval 11, 12. Cette étape est réalisée de manière ininterrompue et le flux unifilaire de produits 2 est continu. On peut voir sur la figure 9 que l'écart de distance qui sépare l'arrivée en zone de prise P des lots de produits 2 circulant sur chaque convoyage aval 11, 12 est réduit par rapport à la figure 8, chaque lot de produits 2 ayant déjà parcouru une bonne partie de son trajet à effectuer entre le système de division 13 et la zone de prise P. En d'autres termes, le deuxième lot de produits 2, formé par le deuxième flux unifilaire, a commencé à rattraper son retard sur le premier lot de produits 2.

La figure 10 montre une nouvelle déviation du flux vers le convoyage aval 11. Les lots de produits 2, formés successivement par le système de division 13, arrivent en zone de prise P au même moment. En particulier, le premier produit 2 de chaque lot arrive au moment en zone de prise P, chacun respectivement sur un convoyage aval 11, 12, au niveau d'une portion d'alimentation 14,15.

La figure 11 montre un mode de réalisation selon lequel l'étape de transfert comprend le transfert simultané d'un lot de produits 2 depuis chacun des convoyages aval 11, 12. Pour ce faire, les produits 2 sont ralentis en zone de prise P, au sein des convoyages aval 11, 12, éventuellement jusqu'à l'arrêt complet, en réduisant la vitesse des convoyages aval 11, 12 au niveau de la zone de prise P avec une décélération qui évite la chute des produits 2. Les produits 2 sont ralentis en entrée de la zone de prise P et se trouvent arrivés à l'arrêt ou circulant à une vitesse très faible au niveau de ladite zone.

De manière avantageuse, dans des modes de réalisation, au moins un des convoyages aval 11, 12 présente deux bandes de convoyage successives, chacune des deux bandes ayant un moteur 7 qui lui est propre. Cela permet alors de ralentir les produits 2 débouchant en zone de prise P sur la portion d'alimentation 14, 15, tandis que la voie directe 110 ou la voie indirecte 120 circule à une vitesse de convoyage permettant au système de division 13 de dévier les produits sous forme de lot sur l'une ou l'autre voie 110, 120.

En d'autres termes, le système de division 13 forme des lots et les convoyages aval 11, 12 sont en fonctionnement au niveau des voies directe et indirecte 110, 120, alors que les produits 2 sont immobiles ou quasi immobiles au niveau de la zone de prise P.

Selon un mode de réalisation préféré, le convoyage aval 12 comprend deux bandes de convoyage successives, une bande sous la forme de la voie indirecte 120 et une bande sous la forme d'une portion d'alimentation 15. Le convoyage aval 11 comprend une seule bande de convoyage, c'est-à-dire que les deux portions successives formées par la voie directe 110 et la portion d'alimentation 14 circulent à la même vitesse de convoyage. Dans cette configuration, et de manière avantageuse, les produits 2 arrivant sous forme de lot sont ralentis lorsqu'ils débouchent au même moment en zone de prise P, à la fois sur la portion d'alimentation 14 et sur la portion d'alimentation 15. Les produits 2 sont ralentis, préférentiellement jusqu'à leur arrêt. En attendant la remise en marche du convoyage aval 11, le système de division 13 peut envoyer les produits 2 sur le convoyage aval 12, dans la mesure où ledit convoyage aval 12 comprend deux bandes de convoyage successives, chacune ayant un moteur 7 qui lui est propre.

Il est également envisageable pour les convoyages aval 11, 12 d'avoir un moteur 7 commun pour les portions d'approvisionnement 14, 15 et deux moteurs 7, un moteur 7 pour chacune des voies directe 110 et indirecte 120, entre le système de division 13 et la zone de prise P. Avantageusement, la commande des systèmes d'entraînement et/ou des moteurs 7 se fait par une unité 6 de contrôle. L'unité 6 de contrôle synchronise les vitesses de convoyage des convoyages aval 11, 12, préférentiellement les vitesses de convoyages des portions d'approvisionnement 14, 15 et des voies directe 110 et indirecte 120.

Dans des modes de réalisation, les convoyages aval 11, 12 sont en forme de U et ont chacun un moteur 7 d'entraînement qui lui est propre.

Suite à leur arrivée en zone de prise P, les produits 2 sous forme de lots sont ensuite transférés jusqu'à la surface 4 de réception. Ce transfert peut se faire par un mouvement du type balayage ou encore en saisissant les produits 2 à l'aide d'une coiffe de préhension qui les agrippe par le haut, puis les amène transversalement jusqu'à la surface 4 de réception. Un cycle de réception de produits 2, de ralentissement, de transfert, se répète pour les convoyages aval 11, 12, la réception sur chacun des convoyages aval 11, 12 de l'installation 100 se faisant sensiblement au même moment, grâce aux différences de longueur de trajet à effectuer. La configuration est donc relativement simple et les temps de cycle sont efficaces.

Le procédé comprend encore une étape, non représentée, de transfert d'au moins un lot de produits 2 depuis la surface 4 d'accumulation jusqu'à au moins un convoyeur de sortie 3.

Dans des modes de réalisation, les produits 2 sont transférés depuis la zone de prise P jusqu'à l'entrée de la surface 4 d'accumulation. Avantageusement, la surface 4 d'accumulation comprend une bande de convoyage et les produits 2 sont alors déplacés d'un bord à l'autre de la surface 4 d'accumulation, afin d'être évacués sur au moins un convoyeur de sortie 3.

En tout état de cause, les produits 2 sortis sont dégagés soit en unifilaire soit en multifilaire. En effet, il est tout à fait possible, dans le cas d'une configuration où le poste en amont délivre les produits 2 en unifilaire et que le poste en aval nécessite des produits 2 en multifilaire, de laisser les lots longitudinaux de produits 2 s'accumuler les uns contre les autres au niveau du côté de sortie de la surface d'accumulation 2, puis de retirer simultanément plusieurs lots longitudinaux, les uns à côté des autres le long d'une direction transversale à la direction de convoyage X. Les produits 2 sont dégagés de la surface 4 d'accumulation là encore transversalement à la direction de convoyage X qu'ils prennent en aval, ce qui signifie que les lots de produits 2 extraits de la surface d'accumulation forment successivement des tronçons longitudinaux du flux en aval de la surface 4 d'accumulation.

Le procédé d'accumulation et de transfert selon l'invention permet de réduire les temps de cycle entre deux transferts successifs, et donc une amélioration de la performance de la ligne de conditionnement.

Dans des modes de réalisation, le transfert entre d'une part au moins un convoyage aval 11, 12 en zone de prise P jusqu'à la surface 4 d'accumulation et d'autre part depuis ladite surface 4 et au moins un convoyeur de sortie 3 est effectué par un moyen de transfert 5, ledit moyen de transfert 5 comprenant une pluralité de poussoirs 52. Chaque poussoir 52 transfère au moins un lot de produits 2 depuis au moins un convoyage aval 11, 12 en zone de prise P jusqu'à la surface 4 d'accumulation, puis, après avoir traversé ladite surface 4, ledit poussoir 52 transfère ledit au moins un lot de produits 2 depuis ladite surface 4 jusqu'à au moins un convoyeur de sortie 3.

Selon une caractéristique additionnelle possible, un poussoir 52 transfère au moins deux lots de produits 2, chaque lot se trouvant sur un convoyage aval 11, 12, depuis la zone de prise P jusqu'à la surface 4 d'accumulation, puis depuis ladite surface 4 jusqu'à au moins un convoyeur de sortie 3. En d'autres termes, dans cette configuration, un poussoir 52 accompagne un ou plusieurs lots de produits 2 de l'entrée à la sortie de la surface 4 d'accumulation.

Dans des modes de réalisation, au moins deux lots de produits 2 successifs, chacun ayant circulé sur l'un des convoyages aval 11, 12 arrivent en même temps en zone de prise P. L'arrivée des au moins deux lots de produits 2 successifs est donc synchronisée. Cela signifie par exemple que le premier produit 2 d'un lot ayant circulé sur un convoyage aval 11 arrive sensiblement au même moment que le premier produit 2 d'un lot ayant circulé sur au moins un autre convoyage aval 12, les au moins deux lots étant passés successivement par le système de division 13. Ceci est possible grâce à la longueur différente des convoyages aval 11, 12 pour au moins deux convoyages aval 11, 12. La différence de longueur de trajet doit être suffisamment importante pour permettre cette synchronisation, a fortiori lorsque les au moins deux convoyages aval 11, 12 ont la même vitesse de convoyage.

En particulier, et de manière préférée, la différence de longueur de trajet correspond à environ à une longueur comprise entre 0.75 et 1.25 fois la longueur d'un train de produits 2, c'est-à-dire d'un lot de produit 2 formé par le système de division 13.

Selon une caractéristique additionnelle possible, l'arrivée synchronisée signifie que le premier lot de produits 2 ayant circulé sur un des convoyages aval 11, 12 s'arrête sensiblement en zone de prise P au même moment que le au moins deuxième lot de produits 2 ayant circulé sur un autre convoyage aval 11, 12, de manière à permettre le transfert jusqu'à la surface 4 d'accumulation.

Selon un mode de réalisation préféré, les convoyages aval 11, 12 ont la même vitesse de convoyage.

L'invention permet avantageusement d'optimiser les cycles de transfert de produits 2 depuis une zone de prise P à une surface 4 d'accumulation, en proposant une installation 100 qui comprend au moins deux convoyages aval 11, 12 de longueur différente. Ainsi, des lots de produits 2 formés successivement par un système de division 13 arrivent sensiblement au même moment en zone de prise P, ce qui permet un transfert optimisé, en une seule étape. Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Installation (100) d'accumulation et de transfert de produits (2) comprenant :
- un dispositif (1) de convoyage desdits produits (2) en un flux unifilaire, ledit dispositif (1) comprenant un convoyage amont (10), au moins deux convoyages aval (11, 12) débouchant longitudinalement dans une zone de prise (P), et un système de division (13) pour envoyer depuis ledit convoyage amont (10) successivement vers l'un des convoyages aval (11, 12) au moins un premier flux unifilaire de produits (2) sous forme de lots vers un convoyage aval (11, 12) et au moins un deuxième flux unifilaire de produits (2) sous forme de lots vers un autre convoyage aval (11, 12),
- au moins un convoyeur de sortie (3) desdits produits (2),
- une surface (4) d'accumulation pour recevoir les produits (2) sous forme de lots depuis la zone de prise (P), ladite surface (4) étant située entre ledit dispositif (1) de convoyage et ledit au moins un convoyeur de sortie (3),
- un moyen (5) de transfert pour déplacer transversalement au moins un lot de produits (2), d'une part, depuis au moins un convoyage aval (11, 12) au niveau de la zone de prise (P) jusqu'à ladite surface (4) d'accumulation et, d'autre part, depuis ladite surface (4) jusqu'audit au moins un convoyeur de sortie (3),
installation (100) **caractérisée en ce que**, pour au moins deux convoyages aval (11, 12), entre ledit système de division (13) et la zone de prise (P), la longueur d'un convoyage aval (11) est plus grande que la longueur d'au moins un autre convoyage aval (12), pour que au moins deux lots de produits (2) formés successivement par le système de division (13) et envoyé, pour l'un d'eux sur l'un des convoyages aval (11, 12) et pour l'autre sur l'autre convoyage aval (11, 12), arrivent sensiblement au même moment au niveau de ladite zone de prise (P).

2. Installation (100) selon la revendication 1, **caractérisée en ce qu'**elle comprend au moins trois convoyages aval (11, 12) et **en ce que** chacun des convoyages aval (11, 12) a une longueur différente, pour que tous les lots de produits (2) formés successivement par le système de division (13) arrivent sensiblement au même moment au niveau de la zone de prise (P).

3. Installation (100) selon la revendication 1, **caractérisée en ce qu'**elle comprend deux convoyages aval (11,12), et **en ce que** le système de division (13) est apte à envoyer depuis ledit convoyage amont (10) successivement et alternativement un premier flux unifilaire de produits (2) sous forme de lots vers un convoyage aval (11, 12) et un deuxième flux unifilaire de produits (2) sous forme de lots vers l'autre convoyage aval (11, 12), pour que deux lots de produits (2) formés successivement par le système de division (13) arrivent sensiblement au même moment au niveau de ladite zone de prise (P).

4. Installation (100) selon l'une quelconque des revendications précédentes, **caractérisée en ce que** les convoyages aval (11, 12) sont en forme de U.

5. Installation (100) selon l'une quelconque des revendications précédentes, **caractérisée en ce que** le système de division (13) est un déflecteur commandé qui dévie successivement et alternativement un nombre déterminé de produits (2) formant ensemble un lot sur les convoyages aval (11, 12).

6. Installation (100) selon l'une quelconque des revendications 1 à 5, **caractérisée en ce que** le moyen (5) de transfert comprend au moins deux parois pour transférer simultanément, depuis la zone de prise (P) jusqu'à la surface (4) d'accumulation, au moins deux lots longitudinaux de produits (2), chacun des lots se situant respectivement sur l'un des convoyages aval (11, 12).

7. Installation (100) selon l'une quelconque des revendications précédentes, **caractérisée en ce que** le moyen de transfert (5) comprend un moyen d'entrée (50) et un moyen de sortie (51), ledit moyen d'entrée (50) étant configuré pour transférer transversalement un lot de produits (2) depuis au moins un convoyage aval (11, 12) en zone de prise (P) jusqu'à la surface (4) d'accumulation et ledit moyen de sortie (51) étant configuré pour transférer transversalement au moins un lot de produits (2) depuis la surface (4) d'accumulation jusqu'à au moins un convoyeur de sortie (3).

8. Installation (100) selon l'une quelconque des 1 à 6, **caractérisée en ce que** le moyen (5) de transfert comprend une pluralité de poussoirs (52), chaque poussoir (52) étant apte à transférer un lot de produits (2) depuis au moins un convoyage aval (11, 12) jusqu'au au moins un convoyeur de sortie (3) en traversant la surface (4) d'accumulation.

9. Installation (100) selon l'une quelconque des revendications précédentes **caractérisée en ce que** les au moins deux convoyages aval (11, 12) ont chacun au moins un moteur (7) d'entraînement qui lui est propre.

10. Installation (100) selon l'une quelconque des revendications précédentes, **caractérisée en ce qu'**au moins un convoyage aval (11, 12) comprend deux bandes de convoyage l'une à la suite de l'autre, chacune des deux bandes ayant un moteur (7) d'entraînement qui lui est propre, pour que les vitesses de convoyage des deux bandes dudit au moins un convoyage aval (11, 12) puissent être différentes.

11. Procédé d'accumulation et de transfert de produits (2) dans une ligne de conditionnement, procédé comprenant les étapes suivantes :
- recevoir un flux unifilaire de produits (2) au niveau d'un convoyage amont (10) puis ;
- répartir le flux unifilaire de produits (2) successivement sur au moins deux convoyages aval (11, 12) sous forme de lots longitudinaux ;
- amener lesdits lots dans une zone de prise (P) grâce auxdits convoyages aval (11, 12) ;
- ralentir lesdits au moins deux convoyages aval (11, 12) au niveau de la zone de prise (P) pour y ralentir les produits (2);
- transférer un lot de produits (2) depuis au moins un convoyage aval (11, 12) au niveau de ladite zone de prise (P) jusqu'à ladite surface (4) d'accumulation ;
- transférer au moins un lot de produits (2) depuis ladite surface (4) d'accumulation jusqu'à au moins un convoyeur de sortie (3),
**caractérisé en ce que** :
- pour au moins deux convoyages aval (11, 12), le trajet pour amener un lot en zone de prise (P) est plus long pour un convoyage aval (11, 12) que pour l'autre convoyage aval (11,12), de sorte à synchroniser l'arrivée en zone de prise (P) de deux lots successifs, chacun circulant respectivement sur un convoyage aval (11 ,12).

12. Procédé selon la revendication 11, **caractérisé en ce que** le transfert d'un lot de produits (2) depuis au moins un convoyage aval (11, 12) au niveau de la zone de prise (P) jusqu'à la surface (4) d'accumulation est réalisé par un outil d'entrée (50) et **en ce que** le transfert d'au moins un lot de produits (2) depuis la surface (4) d'accumulation jusqu'à au moins un convoyeur de sortie (3) est réalisé par un outil de sortie (51).

13. Procédé selon la revendication 11, **caractérisé en ce que** le transfert entre, d'une part, depuis au moins un convoyage aval (11, 12) en zone de prise (P) jusqu'à la surface (4) d'accumulation et, d'autre part, depuis ladite surface (4) jusqu'audit au moins un convoyeur de sortie (3), est effectué par un moyen de transfert (5), ledit moyen de transfert (5) comprenant une pluralité de poussoirs (52), chaque poussoir (52) transférant au moins un lot de produits (2) depuis au moins un convoyage aval (11, 12) en zone de prise (P) jusqu'à ladite surface (4), faisant traverser ladite surface (4) par ledit au moins au lot de produits (2) et transférant ensuite ledit au moins un lot de produits (2) depuis ladite surface (4) jusqu'à au moins un convoyeur de sortie (3).

14. Procédé selon l'une quelconque des revendications 11 à 13, **caractérisé en ce que** au moins deux lots successifs, chacun ayant circulé sur l'un des convoyages aval (11, 12), arrivent en même temps en zone de prise (P).
